# FASCICULE DE BREVET EUROPEEN

(11) **EP 3 601 025 B1**
(45) Date de publication et mention de la délivrance du brevet: **12.01.2022**
(21) Numéro de dépôt: 18713306.1
(22) Date de dépôt: 01.03.2018
(51) Int. Cl.: B62D 65/02, B62D 65/10, B60K 20/04

(54) **LUGE DE PREPARATION ET PROCEDE D'ASSEMBLAGE POUR UN VEHICULE**
VORBEREITUNGSGESTELL FÜR FAHRZEUGMONTAGE UND VERFAHREN ZUR MONTAGE EINES FAHRZEUGS
VEHICLE-ASSEMBLY PREPARATION SKID AND METHOD FOR ASSEMBLING A VEHICLE

(30) Priorité: 29.03.2017 FR 1752618
(43) Date de publication de la demande: 05.02.2020
(73) Titulaire: PSA Automobiles SA, 78300 Poissy (FR)
(72) Inventeur: LEGRAND, Francois Noel, 25200 Montbeliard (FR); FAVRET, Regis, 25400 Audincourt (FR)
(86) Numéro de dépôt international: PCT/FR2018/050477
(87) Numéro de publication internationale: WO 2018/178530

(56) Documents cités:
- EP-A1- 2 101 089
- EP-B1- 2 134 590
- FR-A1- 2 925 404
- FR-A1- 2 925 406
- FR-A1- 2 967 621
- FR-A1- 2 980 445
- FR-A1- 2 985 691
- FR-A1- 3 004 149

## Description

L'invention porte sur un dispositif et un procédé d'assemblage d'un véhicule, en particulier d'une luge de préparation.

Plus précisément, la présente invention concerne un dispositif et procédé d'assemblage d'un faisceau électrique dans un véhicule, en particulier un véhicule automobile.

En fabrication automobile, de façon conventionnelle, on prépare, à part de la ligne d'assemblage principale du véhicule et sur un poste désigné " Poste Organe Mécanique " ou " POM ", un ensemble d'organes du véhicule comprenant par exemple un moteur de traction thermique avec sa ligne d'échappement et ses protections thermiques, un moteur de traction électrique et sa batterie, la boîte de vitesses fixée au moteur thermique et des câbles de commande de la boîte de vitesses fixés à la boîte de vitesses, un ensemble de faisceaux électriques.

On comprendra donc par organes mécaniques, dans tout le texte de ce document, des organes mécaniques au sens large, c'est-à-dire étendu à tous les éléments qui sont préparés pour le montage au poste " POM ", notamment les faisceaux électriques, conduites, câbles de commande.

Cet ensemble d'organes du véhicule est pré-positionné ou indexé sur un support formant une luge de préparation.

On comprendra par indexé ou pré-positionné dans tout le texte de ce document, le fait que chaque organe est positionné relativement par rapport aux autres organes, dans une position d'assemblage correspondant à des positions de fixation définitives, par exemple prévues sur la carrosserie.

Cette luge est ensuite transportée du poste " POM " sur la ligne d'assemblage principale, pour être "coiffée " par la carrosserie du véhicule.

On comprendra par " coiffage ", dans tout le texte de ce document, l'opération d'assemblage sur la ligne d'assemblage principale consistant à aligner la carrosserie du véhicule avec cette luge de préparation, puis à accoster la carrosserie du véhicule sur cet ensemble d'organes du véhicule, par un mouvement relatif verticale, généralement un mouvement de descente de la carrosserie, de façon à atteindre une position permettant l'assemblage de ces organes sur la carrosserie du véhicule.

Lors de l'une des étapes d'assemblage suivant le " coiffage ", un opérateur réalise la connexion des câbles de la commande de la boîte de vitesses (en général, deux câbles) à un levier de vitesses situé à l'intérieur de l'habitacle du véhicule, ainsi que la connexion des faisceaux électriques à des prises électriques à l'intérieur de l'habitacle du véhicule.

On comprendra par habitacle, dans tout le texte de ce document, le volume interne à la carrosserie dont l'accès nécessite le passage d'un opérateur ou d'un manipulateur par un emplacement de la carrosserie réservé à un ouvrant.

Quelle que soit l'endroit où se situe ce levier de vitesses ou ces prises électriques à l'intérieur de l'habitacle, les câbles de la commande ou les faisceaux électriques relient un organe de l'ensemble préparé au poste " POM " à une partie de la carrosserie livrée sur la ligne de montage principale.

Sur la ligne d'assemblage principale, lors de l'étape d'assemblage suivant le " coiffage ", les câbles de la commande de vitesse, déjà fixés à la boîte de vitesses, ainsi que les faisceaux électriques, arrivent par le dessous de la carrosserie du véhicule pour que leur extrémité libre soit connectée respectivement au levier de vitesses et aux prises électriques. Les câbles de la commande de vitesse et les faisceaux électriques passent à travers une ouverture ménagée dans la partie de la carrosserie inférieure appelée généralement tunnel. En passant dans cette ouverture lors du " coiffage ", il y a un risque d'accrochage et d'endommagement des câbles de la commande de vitesse ou des faisceaux électriques.

Pour éviter ce problème, le brevet EP-B-2 134 590 divulgue un procédé de montage tel que précédemment succinctement décrit, utilisant un dispositif de guidage prévu sur la luge pour guider les câbles de la commande de la boîte de vitesses au travers de l'ouverture lors de l'opération de " coiffage ". Les extrémités libres des câbles sont récupérées à l'intérieur de l'habitacle, après avoir enlevé le dispositif de guidage, afin de les connecter au levier de vitesses. La fixation de l'ensemble des organes du véhicule à la carrosserie sur la ligne d'assemblage principale comprend alors une opération de mise en place d'une pièce mobile de fermeture et d'étanchéité de l'ouverture de la carrosserie.

On comprendra par pièce mobile, dans tout le texte de ce document, une pièce devant être assemblée par un opérateur et qui ne peut pas être pré-positionnée ou indexée sur le support de la luge de préparation. Par exemple, la pièce mobile de fermeture de l'ouverture ne peut pas être indexée sur la luge puisque le dispositif de guidage va, dans un premier temps, traverser l'ouverture.

Cette pièce mobile doit être apportée par l'opérateur, précisément à l'endroit de l'ouverture, alors qu'il doit avoir les mains libres pour récupérer les extrémités libres des câbles et les connecter au levier de vitesses, ce qui représente une perte de temps. En outre, l'ergonomie de cette opération de mise en place de la pièce mobile est dégradée, l'opérateur ne pouvant se tenir que d'une seule main et risquant de perdre l'élément de fermeture.

Le but de la présente invention est de remédier à ces problèmes.

A cet effet, l'invention a pour objet une luge de préparation pour l'assemblage d'un véhicule, ladite luge de préparation comprenant un support, un ensemble d'organes mécaniques à assembler indexés sur ledit support, et une pièce mobile à assembler, cette luge de préparation comprenant en outre un dispositif de guidage d'un organe souple longiforme de l'ensemble d'organes mécaniques, ce dispositif de guidage étant un boîtier de protection ayant une base indexée par rapport au support et une extrémité libre opposée de section ouverte, le dispositif de guidage comprenant un logement ouvert vers l'extrémité libre et de forme complémentaire à la pièce mobile.

On comprendra par organe souple longiforme dans tout le texte de ce document, un organe de forme allongée nécessitant d'être comformé par un guidage pour pouvoir tenir une position déterminée de montage, que ce soit par manque de rigidité de l'organe ou à cause des dispersions de montage, de la ligne d'assemblage, ou de fabrication des organes.

Ainsi, ce logement permet au dispositif de guidage de loger la pièce mobile, un opérateur de montage ayant l'accès à cette pièce mobile par l'ouverture du logement. De ce fait, l'opérateur garde les mains libres et, après une opération de " coiffage ", peut récupérer cette pièce par l'habitacle du véhicule, sans avoir à l'apporter par ses propres moyens ce qui permet de gagner du temps et d'améliorer l'ergonomie de son opération de montage.

Dans un mode de réalisation de l'invention, la pièce mobile étant plane, le logement comprend des rainures encerclant partiellement le contour de la pièce mobile.

En effet, ces rainures sont des moyens simple de réalisation du logement, et permettent de maintenir la pièce mobile tout en autorisant un coulissement facilité de la pièce mobile, à la fois pour la glisser dans le logement, mais aussi pour la retirer lorsque l'opérateur doit la monter.

Dans un mode de réalisation, le logement est de forme allongée, la forme allongée définissant un axe orthogonal à la section ouverte.

Ainsi, cette disposition permet de loger une pièce mobile plane dont la plus grande section est plus grande que la section ouverte.

Dans un mode de réalisation, les rainures ont une largeur inférieure à l'épaisseur du contour de la pièce mobile et ont des lèvres élastiques.

Ainsi, la pièce mobile est pincée dans le logement, ce qui permet qu'elle ne s'échappe pas lorsque la luge de préparation se déplace.

Dans un mode de réalisation, le boîtier de protection entourant l'organe souple longiforme et définissant un volume intérieur, le boîtier de protection ayant en outre une section transversale décroissante de la base indexée à l'extrémité libre, le logement est dans le volume intérieur.

Cette caractéristique permet au dispositif de guidage de protéger la pièce mobile lors de l'opération de " coiffage ", de sorte qu'elle n'accroche pas dans une ouverture de la carrosserie traversée par le dispositif de guidage.

L'invention a également pour objet un procédé d'assemblage d'un véhicule utilisant une luge de préparation telle que précédemment décrite, le procédé utilisant en outre une ligne d'assemblage accostant la carrosserie du véhicule sur la luge de préparation, le procédé comprenant :
- une première étape de positionnement des organes mécaniques sur le support, notamment des organes mécaniques d'une chaine de traction,
- une deuxième étape d'indexation du dispositif de guidage par rapport au support, tout en conformant l'élément souple longiforme par le dispositif de guidage,
- une troisième étape amenant la luge de préparation sur la ligne d'assemblage,
- une quatrième étape de " coiffage " qui accoste la carrosserie du véhicule sur la luge de préparation, le dispositif de guidage traversant l'ouverture de la carrosserie,
- une cinquième étape où l'opérateur retire le dispositif de guidage du support par l'intérieur de la carrosserie, le dispositif de guidage étant posé à l'intérieur de ladite carrosserie,
- une sixième étape d'assemblage des organes mécaniques sur la carrosserie,
- une septième étape de retrait de la luge de préparation,
- une huitième étape de remise du dispositif de guidage sur la luge de préparation,

Le procédé étant tel qu'il comprend :
- une première étape intermédiaire d'introduction de la pièce mobile dans le logement avant la quatrième étape,
- une deuxième étape intermédiaire de retrait de la pièce mobile du logement entre les quatrième et septième étape,
- une troisième étape intermédiaire d'assemblage de la pièce mobile entre les cinquième et huitième étape.

Ainsi, par ce procédé, la pièce mobile est transportée par le dispositif de guidage, et donc par la luge de préparation, du poste " POM " à l'habitacle du véhicule, l'habitacle étant avantageusement l'endroit où cette pièce mobile doit être montée. De cette manière, on voit bien que l'opérateur a les mains libres pour récupérer l'extrémité libre de l'organe souple longiforme dans l'habitacle et retirer le dispositif de guidage, ce qui représente un gain de temps. En outre, l'ergonomie de cette opération de mise en place de la pièce mobile est améliorée, l'opérateur pouvant se tenir des deux mains et ne risquant pas de perdre l'élément de fermeture.

Avantageusement, cette pièce mobile est une pièce mobile de fermeture de l'ouverture de la carrosserie, précisément parce que le dispositif de guidage apporte la pièce mobile exactement à l'endroit de son montage, ce qui représente un gain de temps de manipulation de l'opérateur.

En outre, un véhicule assemblé par le procédé précédemment décrit est également divulgué.

D'autres caractéristiques, buts et avantages de l'invention apparaîtront à la lecture de la description des exemples de réalisation non limitatifs qui vont suivre, faite en référence aux figures 1 à 5 annexées, qui représentent :
- figure 1 : un dispositif de guidage selon un mode de réalisation de l'invention,
- figure 2 : le dispositif de guidage de la figure 1 contenant la pièce souple longiforme,
- figure 3 : une carrosserie d'un véhicule en début d'accostage sur le support de la luge de préparation avec le dispositif de guidage de la figure 2,
- figure 4 : un dispositif de guidage selon l'art antérieur à l'invention,
- figure 5 : un logigramme illustrant un procédé d'assemblage selon un mode de réalisation de l'invention.

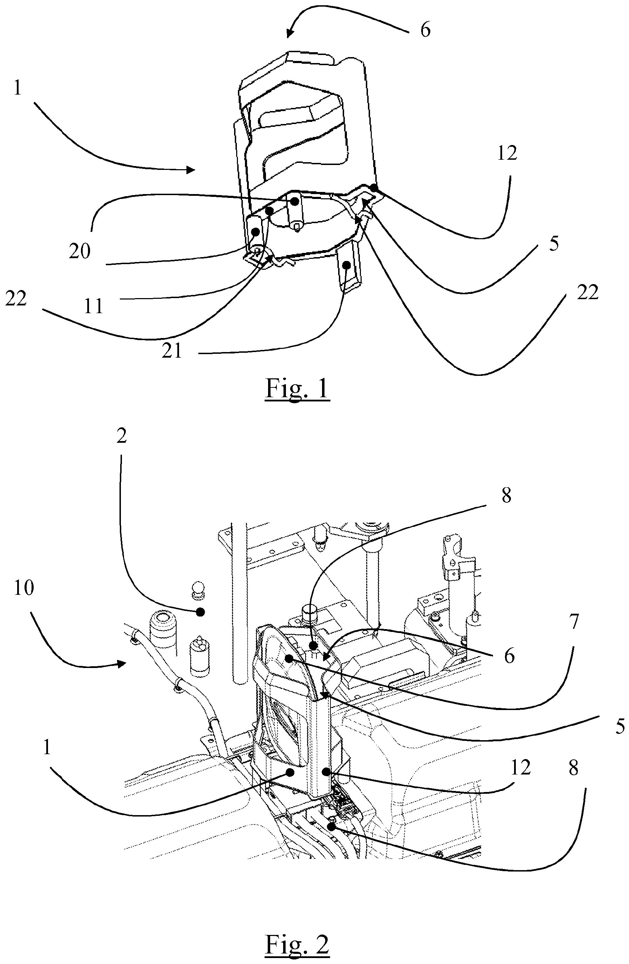

L'ensemble représenté sur la figure 2 comporte un dispositif de guidage 1 selon un mode de réalisation de l'invention.

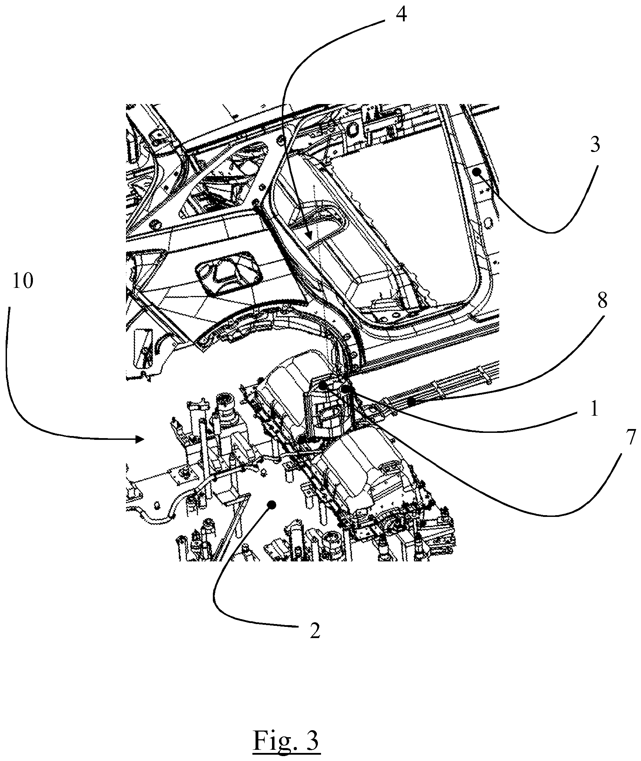

La figure 2 divulgue une luge de préparation 10 pour l'assemblage d'un véhicule comprend un support 2, sous la forme d'une platine supportant un ensemble de positionneurs pour indexer en position un ensemble d'organes mécaniques à assembler. Une pièce mobile 7 à assembler est également présente, par exemple une pièce mobile 7 de fermeture d'une ouverture 4 de la carrosserie 3 du véhicule, cette ouverture 4 étant décrite par la figure 3.

Le dispositif de guidage 1 guide un organe souple longiforme 8 de l'ensemble d'organes mécaniques, par exemple un faisceau électrique. Cet organe longiforme 8 peut très bien, en variante, être un câble de commande d'une boite de vitesses, une conduite d'un fluide, ou tout organe souple longiforme 8 faisant partie de l'ensemble d'organes mécaniques à assembler.

Le dispositif de guidage 1 est un boîtier de protection ayant une base indexée 11 décrite sur la figure 1, cette base 11 étant indexée par rapport au support 2.

L'indexation de la base 11 n'est pas nécessairement directement fait sur le support 2. En effet, la base 11peut être indexée sur l'un des organes de l'ensemble d'organes mécaniques, par exemple un écran de protection, qui lui-même est indexé sur le support 2.

Le dispositif de guidage 1 comprend une extrémité libre opposée 6 à la base 11, l'extrémité libre opposée 6 étant de section ouverte.

Le dispositif de guidage comprend en outre un logement 5 ouvert vers l'extrémité libre opposée 6 et de forme complémentaire à la pièce mobile 7.

La pièce mobile 7 est plane, et le logement 5 comprend des rainures 12 encerclant partiellement le contour de la pièce mobile 7.

Le logement 5 est de forme allongée, cette forme allongée définissant un axe orthogonal à la section ouverte.

Selon un mode de réalisation de l'invention, les rainures 12 au nombre de deux, ont une largeur inférieure à l'épaisseur du contour de la pièce mobile 7 et ont des lèvres élastiques.

L'ensemble représenté sur la figure 1 comporte le dispositif de guidage 1 selon un mode de réalisation de l'invention. Y sont représentés la base indexée 11, le logement 5, les rainures 12, et l'extrémité libre opposée 6 donnant la section ouverte. La pièce mobile 7 coulisse dans les rainures 12 et vient en butée contre deux butées 22, ces butées faisant partie, avec les rainures 12, de la forme complémentaire à ladite pièce mobile 7.

On notera que dans cette figure 1, le dispositif de guidage est un boitier de protection allégé, disposant d'ouvertures latérales, mais en variantes ce boitier peut être réalisé sans ouvertures latérales.

La figure 1 montre également un système d'indexage 20, 21 du dispositif de guidage 1, comprenant deux pions de centrage 20 et un appui 21, le dispositif de guidage 1 étant indexé de façon amovible par rapport au support 2 de la luge de préparation 10 précédemment décrits.

Le boîtier de protection définit un volume intérieur, et a une section transversale décroissante de sa base indexée 11 à l'extrémité libre 6. Le logement 5 est dans le volume intérieur.

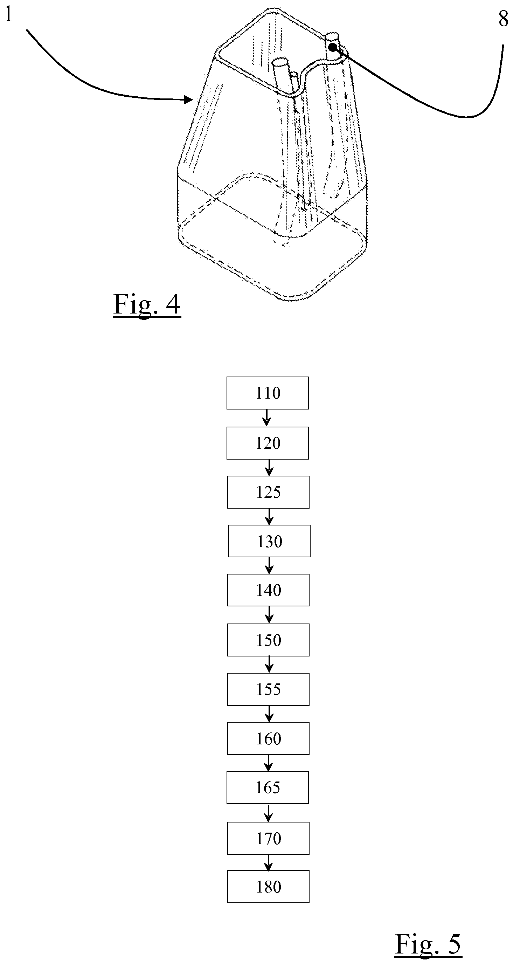

La figure 5 illustre un logigramme selon un procédé d'assemblage de l'invention.

Ce procédé d'assemblage utilise la luge de préparation 10 et une ligne d'assemblage accostant la carrosserie 3 du véhicule sur la luge de préparation 10, réalisant ainsi l'opération de " coiffage ".

Ce procédé comprend une première étape 110 de positionnement des organes mécaniques sur le support 2 de la luge de préparation 10, notamment des organes mécaniques d'une chaine de traction. Cette étape correspondant au poste dit " POM ", est en général réalisée par un opérateur et/ou par un manipulateur, et consiste à positionner les organes mécaniques sur les positionneurs du support 2. Pour les organes les plus lourds, comme le moteur thermique et la boîte de vitesses, ils sont accouplés aux moyens d'outils appropriés.

Ce procédé comprend une deuxième étape 120 d'indexation du dispositif de guidage 1 par rapport au support 2, tout en conformant l'élément souple longiforme 8 par le dispositif guidage 1. Cette indexation du dispositif de guidage consiste à faire correspondre le système d'indexage 20, 21 du dispositif de guidage 1avec des positionneurs correspondants du support 2.

Dans une variante, ces positionneurs correspondants sont réalisés par les organes mécaniques, par exemple des trous réalisés dans une protection thermique sur laquelle est posé le dispositif de guidage. Un autre exemple consisterait en intégrant ces positionneurs sur une agrafe de fixation d'un faisceau.

Une fois indexé, le dispositif de guidage 1 reste amovible, c'est-à-dire qu'il peut être retiré sans avoir à démonter une fixation.

Ce dispositif de guidage 1, une fois indexé, conforme l'élément souple longiforme 8. Par exemple, l'opérateur fait passer l'élément souple longiforme 8 à travers le boîtier de protéction qui entoure alors l'élément souple longiforme 8, lui donnant une inflexion permettant d'orienter l'élément souple longiforme 8 de sorte qu'il corresponde à l'ouverture 4 de la carrosserie 3 lors de l'opération de " coiffage ".

Ce procédé comprend une troisième étape 130 amenant la luge de préparation 10 sur la ligne d'assemblage. Cette étape peut être réalisée par un convoyeur, de façon automatisée. La luge de préparation 10 est alors synchronisée avec la ligne d'assemblage.

Ce procédé comprend une quatrième étape 140 de " coiffage "qui accoste la carrosserie 3 du véhicule sur la luge de préparation 10, le dispositif de guidage 1 traversant l'ouverture 4 de la carrosserie 3. Cet accostage est réalisé par un mouvement relatif vertical, généralement un mouvement de descente de la carrosserie, de façon à atteindre une position permettant l'assemblage de ces organes sur la carrosserie du véhicule, et notamment faire passer l'élément souple longiforme 8 à travers l'ouverture 4 de la carrosserie 3 sans risquer d'accrocher l'élément souple longiforme 8 à la carrosserie 3.

Ce procédé comprend une cinquième étape 150 où l'opérateur retire le dispositif de guidage 1 du support 2 par l'intérieur de la carrosserie 3, le dispositif de guidage 1 étant posé à l'intérieur de la carrosserie 3. En effet, à cette étape le dispositif de guidage 1 a traversé l'ouverture 4, et ne se trouve accessible que par l'habitacle du véhicule. L'élément souple longiforme 8 est toujours à l'intérieur du boîtier de protection, et donc passé à travers l'ouverture 4 de la carrosserie 3. L'opérateur retire alors le dispositif de guidage 1 libérant ainsi l'élément souple longiforme 8 qui peut être raccordé par exemple, à une prise électrique ou un levier de vitesse selon sa nature.

Ce procédé comprend une sixième étape 160 d'assemblage des organes mécaniques sur la carrosserie 3. La luge de préparation 10 est toujours accostée à la carrosserie 3, l'opérateur peut alors fixer l'ensemble des organes mécaniques à la carrosserie 3, le support 2 étant prévu, par exemple, pour laisser l'accessibilité à des visseuses ou autres outils d'assemblage.

Ce procédé comprend une septième étape 170 de retrait de la luge de préparation 10. La luge de préparation 10 est alors de nouveau vide, l'ensemble des organes mécaniques restant fixés à la carrosserie 3.

Ce procédé comprend une huitième étape 180 de remise du dispositif de guidage 1 sur la luge de préparation 10, pour être recyclée et servir de nouveau.

Ce procédé comprend en outre une première étape intermédiaire 125 d'introduction de la pièce mobile 7 dans le logement 5 avant la quatrième étape. Cette introduction se fait manuellement par l'opérateur, avant l'opération de " coiffage ", par exemple au poste " POM ".

Ce procédé comprend en outre une deuxième étape intermédiaire 155 de retrait de la pièce mobile 7 du logement 5 entre les quatrième et septième étape. Cette étape et réalisée par l'opérateur, dans l'habitacle du véhicule. La pièce mobile 7 est alors déjà dans l'habitacle lorsque l'opérateur a besoin de la monter.

Ce procédé comprend en outre une troisième étape intermédiaire 165 d'assemblage de la pièce mobile 7 entre les cinquième et huitième étape. Par exemple, lorsque la pièce mobile 7 est la pièce mobile 7 de fermeture de l'ouverture 4 de la carrosserie 3, le dispositif de guidage 1 doit être retiré avant de monter la pièce mobile 7, qui vient fermer l'ouverture 4. On notera que cette pièce mobile 7 de fermeture comporte une ouverture de passage étanche pour l'élément souple longiforme 8.

La figure 3 montre la carrosserie 3 d'un véhicule en début d'accostage sur le support 2 de la luge de préparation 10 avec le dispositif de guidage 1 de la figure 2. Y sont représenté la pièce mobile 7 dans le dispositif de guidage 1, ce dispositif de guidage 1 étant aligné avec l'ouverture 4 de la carrosserie 3. Nous sommes à l'étape 140 de " coiffage ". La carrosserie 3 va alors descendre dans un mouvement vertical créé par la ligne d'assemblage, de sorte que le dispositif de guidage 1 va traverser l'ouverture 4, emmenant avec lui la pièce mobile 7 et l'organe souple longiforme 8, ici un faisceau électrique.

La figure 4 illustre un dispositif de guidage 1 selon l'art antérieur à l'invention. Il n'y a pas de logement 5, par contre on voit bien l'organe souple longiforme 8 conformé par le dispositif de guidage 1, en passant dans le volume intérieur du boîtier de protection du dispositif de guidage 1.

## Revendications

1. Luge de préparation (10) pour l'assemblage d'un véhicule, ladite luge de préparation (10) comprenant un support (2), un ensemble d'organes mécaniques à assembler indexés sur ledit support (2), et une pièce mobile (7) à assembler, ladite luge de préparation (10) comprenant en outre un dispositif de guidage (1) d'un organe souple longiforme (8) dudit ensemble d'organes mécaniques, ledit dispositif de guidage (1) étant un boîtier de protection ayant une base indexée (11) par rapport audit support (2) et une extrémité libre opposée (6) de section ouverte, **caractérisée en ce que** ledit dispositif de guidage (1) comprend un logement (5) ouvert vers ladite extrémité libre et de forme complémentaire à ladite pièce mobile (7).

2. Luge de préparation (10) selon la revendication 1, ladite pièce mobile (7) étant plane, **caractérisée en ce que** ledit logement (5) comprend des rainures (12) encerclant partiellement le contour de ladite pièce mobile (7).

3. Luge de préparation (10) selon la revendication 2, **caractérisée en ce que** ledit logement (5) est de forme allongée, ladite forme allongée définissant un axe orthogonal à ladite section ouverte.

4. Luge de préparation (10) selon les revendications 2 ou 3, **caractérisée en ce que** lesdites rainures (12) ont une largeur inférieure à l'épaisseur du contour de ladite pièce mobile (7) et ont des lèvres élastiques.

5. Luge de préparation (10) selon l'une des revendications précédentes, ledit boîtier de protection entourant l'organe souple longiforme (8) et définissant un volume intérieur, ledit boîtier de protection ayant une section transversale décroissante de ladite base indexée (11) à ladite extrémité libre (6), **caractérisé en ce que** ledit logement (5) est dans ledit volume intérieur.

6. Procédé d'assemblage d'un véhicule utilisant une luge de préparation (10) selon l'une des revendications précédentes et une ligne d'assemblage accostant une carrosserie (3) dudit véhicule sur ladite luge de préparation (10), ledit procédé comprenant :
• une première étape (110) de positionnement desdits organes mécaniques sur ledit support (2), notamment des organes mécaniques d'une chaine de traction,
• une deuxième étape (120) d'indexation dudit dispositif de guidage (1) par rapport audit support (2), tout en conformant ledit élément souple longiforme (8) par ledit dispositif guidage (1),
• une troisième étape (130) amenant ladite luge de préparation (10) sur ladite ligne d'assemblage,
• une quatrième étape (140) de « coiffage » qui accoste ladite carrosserie (3) dudit véhicule sur ladite luge de préparation (10), ledit dispositif de guidage (1) traversant une ouverture (4) de ladite carrosserie (3),
• une cinquième étape (150) où l'opérateur retire ledit dispositif de guidage (1) dudit support (2) par l'intérieur de ladite carrosserie (3), ledit dispositif de guidage (1) étant posé à l'intérieur de ladite carrosserie (3),
• une sixième étape (160) d'assemblage desdits organes mécaniques sur ladite carrosserie (3),
• une septième étape (170) de retrait de ladite luge de préparation (10),
• une huitième étape (180) de remise dudit dispositif de guidage (1) sur ladite luge de préparation (10),
**caractérisé en ce que** ledit procédé d'assemblage comprend :
• une première étape intermédiaire (125) d'introduction de ladite pièce mobile (7) dans ledit logement (5) avant ladite quatrième étape,
• une deuxième étape intermédiaire (155) de retrait de ladite pièce mobile (7) dudit logement (5) entre lesdites quatrième et septième étape,
• une troisième étape intermédiaire (165) d'assemblage de ladite pièce mobile (7) entre lesdites cinquième et huitième étape.

## Patentansprüche

1. Vorbereitungsschlitten (10) zum Zusammenbauen eines Fahrzeugs, wobei der Vorbereitungsschlitten (10) einen Träger (2), einen Satz mechanischer Komponenten, die auf dem Träger (2) indexiert zu montieren sind, und ein zu montierendes bewegliches Teil (7) umfasst, wobei der Vorbereitungsschlitten (10) ferner eine Führungsvorrichtung (1) eines flexiblen länglichen Elements (8) des Satzes mechanischer Elemente umfasst, wobei die Führungsvorrichtung (1) ein Schutzgehäuse mit einer in Bezug auf die indexierten Basis (11) ist Träger (2) und einem gegenüberliegenden freien Ende (6) mit offenem Querschnitt, **dadurch gekennzeichnet, dass** die Führungsvorrichtung (1) ein zum freien Ende hin offenes Gehäuse (5) mit komplementärer Form zu dem beweglichen Teil (7) umfasst.

2. Vorbereitungsschlitten (10) nach Anspruch 1, wobei der bewegliche Teil (7) flach ist, **dadurch gekennzeichnet, dass** das Gehäuse (5) Nuten (12) aufweist, die teilweise die Kontur des beweglichen Teils (7) umschließen.

3. Vorbereitungsschlitten (10) nach Anspruch 2, **dadurch gekennzeichnet, dass** das Gehäuse (5) eine längliche Form hat, wobei die längliche Form eine Achse orthogonal zu dem offenen Abschnitt definiert.

4. Vorbereitungsschlitten (10) nach Anspruch 2 oder 3, **dadurch gekennzeichnet, dass** die Rillen (12) eine Breite haben, die geringer ist als die Dicke des Umrisses des beweglichen Teils (7) und elastische Lippen aufweisen.

5. Vorbereitungsschlitten (10) nach einem der vorhergehenden Ansprüche, wobei das Schutzgehäuse das längliche flexible Element (8) umgibt und ein Innenvolumen definiert, wobei das Schutzgehäuse einen abnehmenden Querschnitt der indexierten Basis (11) zum freien Ende (6), **dadurch gekennzeichnet, dass** sich das Gehäuse (5) in dem Innenvolumen befindet.

6. Verfahren zum Zusammenbauen eines Fahrzeugs unter Verwendung eines Vorbereitungsschlittens (10) nach einem der vorhergehenden Ansprüche und einer Montagelinie zum Andocken einer Karosserie (3) des Fahrzeugs an den Vorbereitungsschlitten (10), wobei das Verfahren umfasst:
• einen ersten Schritt (110) des Positionierens der mechanischen Elemente auf dem Träger (2), insbesondere der mechanischen Elemente einer Zugkette,
• einen zweiten Schritt (120) des Indexierens der Führungsvorrichtung (1) in Bezug auf den Träger (2), während das langgestreckte flexible Element (8) durch die Führungsvorrichtung (1) angepasst wird,
• einen dritten Schritt (130), um den Vorbereitungsschlitten (10) zu dem Montageband zu bringen,
• einen vierten Schritt (140) des " Abdeckens ", der die Karosserie (3) des Fahrzeugs auf dem Vorbereitungsschlitten (10) platziert, wobei die Führungsvorrichtung (1) durch eine Öffnung (4) der Karosserie (3) verläuft,
• einen fünften Schritt (150), bei dem der Bediener die Führungsvorrichtung (1) von der Stütze (2) durch das Innere des Körpers (3) entfernt, wobei die Führungsvorrichtung (1) innerhalb des Körpers (3) platziert wird,
• einen sechsten Schritt (160) des Montierens der mechanischen Komponenten an dem Körper (3),
• einen siebten Schritt (170) des Entfernens des Vorbereitungsschlittens (10),
• einen achten Schritt (180) des Zurückführens der Führungsvorrichtung (1) zu dem Vorbereitungsschlitten (10),
**dadurch gekennzeichnet, dass** das Montageverfahren umfasst:
• einen ersten Zwischenschritt (125) des Einführens des beweglichen Teils (7) in das Gehäuse (5) vor dem vierten Schritt,
• einen zweiten Zwischenschritt (155) des Zurückziehens des beweglichen Teils (7) aus dem Gehäuse (5) zwischen dem vierten und siebten Schritt,
• einen dritten Zwischenschritt (165) des Zusammenbauens des beweglichen Teils (7) zwischen dem fünften und achten Schritt.

## Claims

1. Preparation sled (10) for assembling a vehicle, said preparation sled (10) comprising a support (2), a set of mechanical components to be assembled indexed on said support (2), and a moving part ( 7) to be assembled, said preparation sled (10) further comprising a guide device (1) of a flexible elongate member (8) of said set of mechanical members, said guide device (1) being a protective housing having a base indexed (11) with respect to said support (2) and an opposite free end (6) of open section, **characterized in that** said guide device (1) comprises a housing (5) open towards said free end and of complementary shape to said moving part (7).

2. Preparation sled (10) according to claim 1, said movable part (7) being flat, **characterized in that** said housing (5) comprises grooves (12) partially encircling the contour of said movable part (7).

3. Preparation sled (10) according to claim 2, **characterized in that** said housing (5) is of elongated shape, said elongated shape defining an axis orthogonal to said open section.

4. Preparation sled (10) according to claims 2 or 3, **characterized in that** said grooves (12) have a width less than the thickness of the outline of said movable part (7) and have elastic lips.

5. Preparation sled (10) according to one of the preceding claims, said protective casing surrounding the elongated flexible member (8) and defining an interior volume, said protective casing having a decreasing cross section of said indexed base (11) to said free end (6), **characterized in that** said housing (5) is in said interior volume.

6. Method of assembling a vehicle using a preparation sled (10) according to one of the preceding claims and an assembly line docking a body (3) of said vehicle on said preparation sled (10), said method comprising :
• a first step (110) of positioning said mechanical members on said support (2), in particular mechanical members of a traction chain,
• a second step (120) of indexing said guiding device (1) relative to said support (2), while conforming said elongated flexible element (8) by said guiding device (1),
• a third step (130) bringing said preparation sled (10) to said assembly line,
• a fourth step (140) of " capping " which places said body (3) of said vehicle on said preparation sled (10), said guide device (1) passing through an opening (4) of said body (3),
• a fifth step (150) where the operator removes said guide device (1) from said support (2) through the interior of said body (3), said guide device (1) being placed inside said body (3),
• a sixth step (160) of assembling said mechanical components on said body (3),
• a seventh step (170) of removing said preparation sled (10),
• an eighth step (180) of returning said guide device (1) to said preparation sled (10), **characterized in that** said assembly method comprises :
• a first intermediate step (125) of introducing said movable part (7) into said housing (5) before said fourth step,
• a second intermediate step (155) of withdrawing said movable part (7) from said housing (5) between said fourth and seventh step,
• a third intermediate step (165) of assembling said movable part (7) between said fifth and eighth step.
